# EUROPÄISCHE PATENTANMELDUNG

(11) **EP 3 553 616 A1**
(43) Veröffentlichungstag der Anmeldung: **16.10.2019**
(21) Anmeldenummer: 18166733.8
(22) Anmeldetag: 11.04.2018
(51) Int. Cl.: G05B 23/02

(54) **URSACHENBESTIMMUNG VON ANOMALIEEREIGNISSEN**

(71) Anmelder: Siemens Aktiengesellschaft, 80333 München (DE)
(72) Erfinder: Klos, Hans-Henning, 91249 Weigendorf (DE); Paulitsch, Christoph, 76137 Karlsruhe (DE)

(57) **Zusammenfassung**

Verfahren zur Auswertung mindestens eines Datensatzes zumindest einer Komponente eines Automatisierungssystems, gekennzeichnet durch Umfassen und/oder Veranlassen folgender Schritte:
Bestimmen eines Intervalls zwischen zwei Anomalieereignissen in einem ersten Datensatz, welcher erste Datensatz Daten bezogen auf wenigstens eine erste Komponente des Automatisierungssystems umfasst, und
Bestimmen von sich wiederholenden, und entsprechend dem Intervall beabstandeten Ereignissen in einem zweiten Datensatz, welcher zweite Datensatz Daten wenigstens einer zweiten Komponente des Automatisierungssystems umfasst.

## Beschreibung

Die vorliegende Offenbarung bezieht sich auf die Erkennung von Anomalieereignissen und deren Ursächlichkeit(en) in erfassten oder gemessenen Daten und insbesondere auf Verfahren, Systeme und Computerprogramme sowie Computerprogrammprodukte zur Erkennung von Anomalieereignissen und deren Ursächlichkeit innerhalb von erfassten oder gemessenen Daten.

Aus der Offenlegungsschrift WO 2017086963 A1 ist ein Verfahren zum Erfassen einer Anomalie in Daten, die von jedem von mehreren korrelierten Sensoren bereitgestellt werden, bekannt geworden. Dabei werden Zeitreihendatensequenzen von jedem Sensor empfangen, und eine numerischen Darstellung für jede der Zeitreihendatensequenzen bestimmt, schließlich wird ein Anomaliewert für jede der Zeitreihendatensequenzen unter Verwendung der bestimmten numerischen Darstellung für jede der Zeitreihendatenfolgen bestimmt und eine Verteilung der bestimmten Anomaliewerte unter normalen Bedingungen gewonnen.

Aus der Patentschrift US 7310590 B1 ist es bekannt geworden, eine Zeitreihe von mehreren Funktionen gleichzeitig zu analysieren, um eine Anomalie für einen Datenpunkt in der Zeitreihe zu identifizieren. Datenpunktwerte werden von mehreren Funktionen vorhergesagt. Eine Anomalie tritt auf, wenn ein tatsächlicher Datenpunkt in der Reihe sich signifikant von dem vorhergesagten Wert des Datenpunkts, wie er von den Funktionen erzeugt wurde, unterscheidet. Wenn genügend statistische Modelle eine Anomalie für einen Datenpunkt festgestellt haben, wird dort ein Anomalieereignis generiert. Der Satz von Funktionen kann verschiedene Arten von Funktionen, den gleichen Funktionstyp, der mit verschiedenen Konstanten konfiguriert ist, oder eine Kombination von diesen umfassen. Ferner ist auch aus der Offenlegungsschrift US 20120041575 A1 ein Verfahren zur Anomalieerkennung bekannt geworden.

Diese bekannten Verfahren zur Anomalieerkennung erkennen den zugrundeliegenden Sachverhalt, d.h. die Ursache für ein oder mehrere Anomalieereignissen, nicht bzw. nicht automatisch, so dass eine Ursachenerkennung nicht bzw. nicht automatisch erfolgen kann.

Es ist daher eine Aufgabe der vorliegenden Erfindung eine oder mehrere potentielle Ursachen für eine Anomalie bzw. ein oder mehrere Anomalieereignisse zu erkennen und eine Verbesserung der Anomalieerkennung vorzuschlagen.

Die Aufgabe wird durch ein Verfahren, eine Vorrichtung, ein Computerprogramm, ein Computerprogrammprodukt und einen Datenstrom gelöst.

In einer ersten Ausführungsform wird die Aufgabe durch ein Verfahren zur Auswertung mindestens eines Datensatzes zumindest einer Komponente eines Automatisierungssystems, gelöst. Das Verfahren umfasst und/oder veranlasst dabei folgende Schritte: Bestimmen eines Intervalls zwischen zwei Anomalieereignissen in einem ersten Datensatz, welcher erste Datensatz Daten bezogen auf wenigstens eine erste Komponente des Automatisierungssystems umfasst, und Bestimmen von sich wiederholenden, und entsprechend dem Intervall beabstandeten Ereignissen in einem zweiten Datensatz, welcher zweite Datensatz Daten wenigstens einer zweiten Komponente des Automatisierungssystems umfasst.

In einer zweiten Ausführungsform wird die Aufgabe durch eine Vorrichtung zur Durchführung des Verfahrens gemäß der ersten Ausführungsform gelöst.

In einer dritten Ausführungsform wird die Aufgabe durch ein Computerprogramm mit Programmcodemittel zur Durchführung des Verfahrens gemäß der ersten Ausführungsform gelöst. Das Computerprogramm umfasst dabei Programmcodemittel, die, wenn sie ausgeführt werden, dazu dienen, einen oder mehrere der Verfahrensschritte des Verfahrens gemäß der ersten Ausführungsform auszuführen.

In einer vierten Ausführungsform wird die Aufgabe durch ein Computerprogrammprodukt mit Programmcodemittel gelöst. Das Computerprogrammprodukt umfasst dabei Programmcodemittel, die, wenn sie ausgeführt werden, dazu dienen, einen oder mehrere der Verfahrensschritte des Verfahrens gemäß der ersten Ausführungsform auszuführen.

In einer fünften Ausführungsform wird die Aufgabe durch einen Datenstrom gelöst, der ein Computerprogramm gemäß der dritten Ausführungsform repräsentiert.

Die vorstehenden und andere Merkmale und Vorteile der Erfindung gehen aus der folgenden detaillierten Beschreibung in Verbindung mit den beigefügten Zeichnungen hervor.
- FIG 1: zeigt eine schematische Darstellung eines Automatisierungssystems welches mit einer Cloud-Infrastruktur verbunden ist,
- FIG 2: zeigt eine schematische Darstellung einer ersten Ausführungsform einer Vorrichtung zur Auswertung mindestens eines Datensatzes, insbesondere zur Ursachenbestimmung von Anomalieereignissen,
- FIG 3: zeigt eine schematische Darstellung einer zweiten Ausführungsform einer Vorrichtung zur Auswertung mindestens eines Datensatzes, insbesondere zur Ursachenbestimmung von Anomalieereignissen,
- FIG 4: zeigt eine schematische Darstellung einer Ausführungsform umfassend mehrere Verfahrensschritte zur Ursachenbestimmung von Anomalieereignissen durch Bestimmung eines Intervalls zw. Anomalieereignissen,
- FIG 5: zeigt eine schematische Darstellung einer Ausführungsform umfassend mehrere Verfahrensschritte zur Ursachenbestimmung von Anomalieereignissen durch Durchführen einer Autokorrelation basierend auf einem ersten Datensatz,
- FIG 6: zeigt eine schematische Darstellung einer Ausführungsform umfassend mehrere Verfahrensschritte zur Ursachenbestimmung von Anomalieereignissen durch Durchführen einer Kreuzkorrelation basierend auf einem ersten Datensatz und einem zweiten Datensatz,
- FIG 7: zeigt eine schematische Darstellung einer Ausführungsform umfassend mehrere Verfahrensschritte zur Ursachenbestimmung von Anomalieereignissen durch Ausgleichen von Änderungen eines Intervalls zwischen Anomalieereignissen,
- FIG 8: zeigt eine schematische Darstellung einer Ausführungsform umfassend mehrere Verfahrensschritte zur Ursachenbestimmung von Anomalieereignissen durch Berücksichtigung von verschiedenen Betriebszuständen eines Automatisierungssystems,
- FIG 9: zeigt eine schematische Darstellung einer Ausführungsform umfassend mehrere Verfahrensschritte zur Ursachenbestimmung von Anomalieereignissen durch Bestimmen verschiedener Anomalieindikatoren,
- FIG 10: zeigt eine schematische Darstellung einer Ausführungsform umfassend mehrere Verfahrensschritte zur Ursachenbestimmung von Anomalieereignissen durch Bestimmen zusätzlicher Anomalieindikatoren,
- FIG 11: zeigt eine schematische Darstellung einer Ausführungsform umfassend mehrere Verfahrensschritte zur Ursachenbestimmung von Anomalieereignissen durch Bestimmen einer m-dimensionalen Transformation,
- FIG 12: zeigt eine schematische Darstellung einer Ausführungsform umfassend mehrere Verfahrensschritte zur Ursachenbestimmung von Anomalieereignissen durch weitere Auswertung einer m-dimensionalen Transformation.

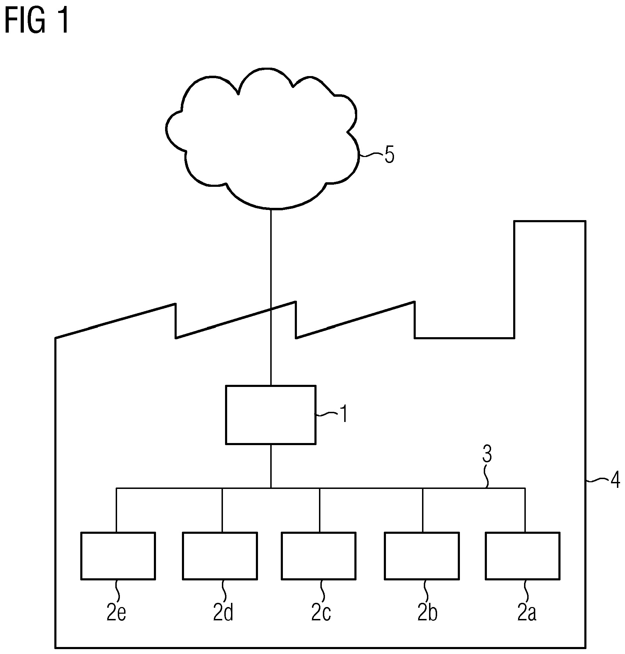

In Automatisierungssystemen, wie bspw. in FIG 1 dargestellt, werden vielfach Komponenten, wie bspw. Feldgeräte eingesetzt, die zur Erfassung und/oder Beeinflussung von Prozessgrößen dienen. Zur Erfassung von Prozessgrößen können Messgeräte dienen, wie beispielsweise Füllstandsmessgeräte, Durchflussmessgeräte, Druck- und Temperaturmessgeräte, pH-Messgeräte, Leitfähigkeitsmessgeräte, usw., welche die entsprechenden Prozessgrößen Füllstand, Durchfluss, Druck, Temperatur, pH-Wert bzw. Leitfähigkeit erfassen. Zur Beeinflussung der Prozessgrößen können Aktoren verwendet werden, wie Ventile oder Pumpen, über die z.B. der Durchfluss einer Flüssigkeit in einer Rohrleitung oder der Füllstand eines Mediums in einem Behälter geändert wird. Unter dem verwendeten Begriff Komponente sind alle Typen von Messgeräten und Aktoren zu subsumieren. Als Komponenten werden darüber hinaus auch alle Geräte bezeichnet, die prozessnah eingesetzt werden und die prozessrelevante Informationen liefern oder verarbeiten. Neben den zuvor genannten Messgeräten/Sensoren und/oder Aktoren werden als Komponenten allgemein auch solche Einheiten bezeichnet, die direkt an einem Bus, wie bspw. einem Feldbus, angeschlossen sind und zur Kommunikation mit einer übergeordneten Einheit dienen, wie z.B. Remote I/Os, Gateways, Linking Devices und Wireless Adapter bzw. Funkadapter, PLC etc. Auf der Feldebene können je nach Größe der Anlage eine oder mehrere Steuerungen PLC A, PLC B angeordnet sein. Die Kommunikation zwischen den Steuerungen PLC A, PLC B und den Komponenten, die an eine der Steuerungen PLC A, PLC B angekoppelt sind, erfolgt über zumindest einen der in der Automatisierungstechnik gebräuchlichen Feldbusse. Auf der Steuerungsebene liefern die Steuerungen PLC A, PLC B ihre von den Komponenten gesammelten Daten, wie bspw. Messwerte, und/oder weiterverarbeiteten Messwerte an eine übergeordnete Steuereinheit, z.B. eine SCADA. Die Komponenten des Automatisierungssystems sind bspw. netzwerkfähig ausgestaltet und über ein Netzwerk miteinander verbunden. Jeder Komponente kann dabei eine eindeutige Adresse in dem Netzwerk zugeordnet werden. Die Kommunikation kann vermittels eines Netzwerkprotokolls erfolgen. Somit wird vorliegend auch eine Steuerung als eine Komponente verstanden. Ferner können eine oder mehrere Komponenten auch rein softwaremäßig, bspw. in Form eines sog. (Software-)Agenten, ausgeführt sein.

FIG 1 zeigt ein Automatisierungssystem, das an eine Cloud-Infrastruktur 5 angeschlossen ist. Zur Herstellung einer Verbindung mit der Cloud-Infrastruktur ist in dem Automatisierungsnetzwerk 3 des Automatisierungssystems eine Cloud-Schnittstelle vorgesehen. Die Cloud-Schnittstelle kann dabei Teil einer Kommunikationsvorrichtung 1 sein. Die Cloud-Schnittstelle kann auch direkt im Automatisierungsnetzwerk 3, bspw. in einem der Komponenten des Automatisierungssystems, bspw. als z.B. (Software-)Agent, installiert werden. Das Automatisierungssystem kann bspw. wie in FIG 1 gezeigt, eine oder mehrere Komponenten 2a, 2b, 2c, 2d, 2e aufweisen.

Die Cloud-Infrastruktur kann dabei einen oder mehrere Server, eine oder mehrere Plattformen und/oder einen oder mehrere Anwendungen, d.h. Computerprogramme (die auf der einen oder mehreren Plattformen ablaufen bzw. ablauffähig sind), aufweisen. Bei der Cloud-Infrastruktur kann es sich bspw. um die sog. MindSphere der Firma Siemens handeln. Die Cloud-Infrastruktur wird dabei bspw. durch eine oder mehrere Recheneinheiten realisiert, die vorzugsweise einen oder mehrere Cloud-Dienste zur Verfügung stellen.

Die Cloud-Infrastruktur kann somit kommunikativ mit dem Automatisierungssystem 4 verbunden sein. Bspw. kann die Verbindung durch o.g. Kommunikationsvorrichtung, bspw. einer sog. MindConnect Nano der Firma Siemens, eingerichtet sein bzw. werden. Die Kommunikationsvorrichtung 1 kann somit zur Datenaufnahme über eine oder mehrere Protokolle dienen, und ermöglicht die Übertragung dieser Daten an die Cloud-Infrastruktur. Die Kommunikationsvorrichtung 1 kann dabei die Übermittlung verschlüsselter Daten über eine gesicherte Internetverbindung unterstützen, um cloud-basierte Anwendungen und Dienste zu ermöglichen.

Innerhalb eines Automatisierungssystems und/oder bei der Übertragung von Daten an die Cloud-Infrastruktur fallen jedoch unter Umständen große Datenmengen an. Diese Daten werden bspw. aus einer Vielzahl von Komponenten wie Aktoren, internen und externen Sensoren, Odometrie und Telemetrie erzeugt, die üblicherweise mit hoher Frequenz überwacht werden. Die getrennt überwachten Komponenten können als Dimensionen betrachtet werden, und somit kann eine Sammlung von überwachten Ablesungen zu einem bestimmten Zeitpunkt als ein multidimensionaler Punkt betrachtet werden. Daher können Methoden, die einen Anomalie-Score für jeden gegebenen Punkt erzeugen, Berechnungen verwenden, die die Dichte der Punkte berücksichtigen, wie zum Beispiel Mahalanobis Distance oder K-Nearest Neighbor (KNN) oder die Dimension der multidimensionalen Punkte mittels Hauptkomponentenanalyse oder selbstorganisierende Karten reduzieren, wie insbesondere in der Offenlegungsschrift US 20130060524 A1 gezeigt.

Die Daten können dabei eine oder mehrere miteinander korrelierende physikalische und/oder chemische Größen repräsentieren. Diese Größen können von Komponenten, wie bspw. Sensoren, Aktoren und/oder Steuerungen, geliefert werden. Bei den Komponenten kann es sich um Komponenten der gleichen Art oder Komponenten unterschiedlicher Art handeln. Bspw. kann es sich um Sensoren handeln, die die gleiche Art oder unterschiedliche Art von Messung (z. B. Temperatur) einer oder mehrerer physikalischer und/oder chemischer Größen durchführen und sich bevorzugt relativ nahe beieinander befinden (z. B. innerhalb der industriellen Anlage).

Eine Anomalie ist üblicherweise definiert als mindestens ein Datenpunkt, der sich in seinem tatsächlich erfassten oder gemessenen Wert signifikant genug von den erfassten oder gemessenen Werten der verbleibenden Datenpunkte in einer Gruppe, einem Muster, einer Kette oder einer Datensequenz, kurz einem Datensatz, unterscheidet, bspw. um als mindestens problematisch markiert zu werden. Das heißt, aus historischen Gründen oder auf andere Weise schlagen die erfassten oder gemessenen Daten einen erwarteten "normalen" Wert oder Bereich von normalen Werten für die abgetasteten Daten vor, und die Anomalie ist ein Datenwert, der nicht oder nicht genau genug mit dem diesem normalen Werte oder Bereich von normalen Werten der Daten zusammenpasst. Andere gebräuchliche Namen für Anomalien sind Ausreißer, Abweichungen, Abnormalitäten, Überraschungen, Intrusionen, Ausnahmen usw. Die Gruppe von Datenpunkten, die abgetastet werden und häufig auf Anomalien untersucht werden, kann als eine Zeitreihe bezeichnet werden, die eine Sequenz oder ein Muster von Daten ist, die über eine Zeitspanne gemessen werden, in der jeder Datenpunkt einem diskreten Punkt oder erfassten Wert in der Zeit entspricht (z. B. ein Datenpunkt, der pro Sekunde über einen Zeitraum von einer Stunde erfasst wird).

Wenn eine Anomalie erfasst oder erkannt wird, löst sie häufig eine Folgeprozedur aus, zum Beispiel eine, die die Ursache der Anomalie identifiziert und/oder verhindert, dass die Anomalie dem Automatisierungssystem, das die Daten enthält oder verwendet; z.B. eine Art von Prozesssteuerungssystem oder eine Prozedur, Schaden zufügt. Die Folgeprozedur kann Probleme, die durch die erkannte Anomalie verursacht werden, in dem Automatisierungssystem korrigieren. Somit bezieht sich Anomalieerkennung im Allgemeinen auf das Erkennen eines Musters oder von Mustern in einem gegebenen Datensatz, die nicht mit einem etablierten, erwarteten oder normalen Verhaltensdatenmuster übereinstimmen. In der Regel ist es wünschenswert, die Anomalie so früh oder so schnell wie möglich zu erkennen, bevor sie dem zugrunde liegenden Datenverarbeitungssystem und/oder dem Automatisierungssystem Schaden zufügt. Ursache für eine Anomalie können dabei Änderungen des in dem Automatisierungssystem ablaufenden Prozesses sein.

Im Allgemeinen nimmt die Rolle der Technologie ständig zu und neue Anwendungen und Anwendungsbereiche für bestehende Technologien werden täglich entdeckt. Ein solcher Bereich ist der Einsatz von Sensoren zur Überwachung der Umgebung und zur Überwachung von Steuereinrichtungen, beispielsweise in industriellen Anwendungen und im täglichen öffentlichen Gebrauch. Beispiele können dabei Umgebungssensoren umfassen, die sich im Freien befinden, Temperatursensoren, die in verschiedenen Räumen eines Hauses angeordnet sind, und mehrere Arten von Sensoren, die sich beispielsweise in Autos, Zügen, Büros, Fabriken und Computernetzwerken befinden. Eines der Hauptziele von Sensorüberwachungsschemata ist die Erkennung und Verhinderung von Fehlfunktionen bei der Steuerung von Geräten, indem Anomalien so schnell wie möglich in den von den Sensoren gelieferten Messdaten identifiziert werden. Wie bereits geschildert, gibt es Methoden, die Anomalien in Zeitreihendaten lokalisieren oder bestimmen können.

Im industriellen Umfeld, wie bspw. in einem Automatisierungssystem, werden dabei, insbesondere sich wiederholende, Prozesseinflüsse unter Umständen nicht als solche erkannt und die zugrundeliegende, industriespezifische Betriebsführung, z.B. bedingt durch unregelmäßige Pausenzeiten o.ä., bspw. bei Übergabevorgängen zwischen Stationen in der Halbleiterindustrie oder im Presswerk, kann eine Ursachenerkennung behindern.

In einem ersten Schritt kann zweckmäßigerweise eine Erkennung einer oder mehrerer Anomalien bzw. eines oder mehrerer Anomalieereignisse in einem oder in mehreren Datensätzen erfolgen, die bspw. von einer oder von mehreren Komponenten, die bspw. korrelierte Größen repräsentieren, bereitgestellt werden. Dazu kann bspw. das Empfangen einer oder mehrerer Datensätze, insbesondere in Form einer oder mehrerer Zeitreihen von jedem der mehreren Datenquellen, wie bspw. einem oder mehreren Komponenten, wie bspw. Sensoren, Aktoren oder sonstigen prozessnahen Komponenten, erfolgen. Ein Datensatz kann eine Vielzahl von Daten umfassen, die von einer Komponente mit einer Abtastfrequenz erfasst werden. Dabei kann es sich bspw. um Rohdaten von einer oder mehreren Komponenten handeln. Ferner können in einem Datensatz auch abgeleitete Daten enthalten sein. Bspw. kann ein Datensatz, bspw. der erste und/oder der zweite Datensatz Rohdaten und/oder anhand der Rohdaten berechnete Daten enthalten.

Andererseits können eine oder mehrere Anomalieereignisse bspw. von einem Nutzer bestimmt werden. Dies kann bspw. durch Auswahl eines oder mehrerer Ereignisse aus einem der Datensätze erfolgen. Ferner kann dies durch Auswählen von Daten in dem Datensatz, bspw. über eine Anzeige- und/oder Bedieneinheit, erfolgen.

Die im Rahmen der vorliegenden Offenbarung genannten Verfahren(sschritte) können dabei mittels einer Vorrichtung ausgeführt werden, welche Vorrichtung, bspw. eine Anomalie in einem oder mehreren Datensätzen, die von einem oder mehreren Komponenten bereitgestellt werden, erfasst, zumindest einen Prozessor umfasst, der mit einem oder mehreren Speichern in Verbindung steht. Der Prozessor kann konfiguriert sein, um von einem, mehreren oder jedem der Mehrzahl von Komponenten einen entsprechende Datensatz, bspw. in Form einer Zeitreihe, zu empfangen, wobei jeder Datensatz vorzugsweise eine Mehrzahl von Daten enthält. Der Prozessor kann bspw. auch konfiguriert sein, um eine numerische Repräsentation für jede der Zeitreihen zu bestimmen, um einen Anomaliewert für jede der Zeitreihen unter Verwendung der bestimmten numerischen Darstellung für jede der Zeitreihen zu bestimmen, um eine Verteilung der ermittelten Anomalie-Scores unter normalen Bedingungen zu bestimmen. Ein entsprechend geeignetes System ist bspw. in der WO2017086963A1 beschrieben.

Eine entsprechende Vorrichtung kann bspw. in einer Ausführungsform, wie in FIG 1 dargestellt, physisch innerhalb des Automatisierungssystems angeordnet sein. Bei der Vorrichtung kann es sich bspw. um die Kommunikationsvorrichtung 5 handeln. Diese Vorrichtung kann konfiguriert sein, Daten von einem, mehreren oder jeder der mehreren Komponenten 2a, 2b, 2c, 2d, 2e zu empfangen. Die Vorrichtung kann dabei drahtlos oder drahtgebunden mit jeder der Komponenten 2a, 2b, 2c, 2d, 2e kommunizieren. Jede Komponente 2a, 2b, 2c, 2d, 2e kann seine Daten der Vorrichtung bspw. in einer Zeitreihe bereitstellen, so dass jede Komponente seine Daten zu diskreten Zeitpunkten (z. B. einmal pro Sekunde, einmal pro Minute, einmal pro Stunde usw.) bereitstellen kann. Dies kann beispielsweise erreicht werden, indem jede Komponente 2a, 2b, 2c, 2d, 2e seine Daten kontinuierlich bereitstellt und die Vorrichtung dann die Daten jeder Komponente periodisch in den gewünschten Zeitintervallen liest, z. B. einmal pro Sekunde, einmal pro Minute, einmal pro Stunde, etc. Wenn die Abtastfrequenz nicht für alle Komponenten 2a, 2b, 2c, 2d, 2e gleich ist, kann ein Vektor von Statistiken für jede Zeitreihe berechnet oder bestimmt werden - zum Beispiel ein Maximum, ein Minimum, ein Mittelwert, eine Standardabweichung, Momente höherer Ordnung, etc. Dies ermöglicht einen direkten Vergleich der Daten für jede Zeitreihe.
Zudem kann, wie oben geschildert, ein Anomalie-Score in einem Schritt für jede der Zeitreihen von den entsprechenden Komponenten, bei denen es sich bspw. um Temperatursensoren handeln kann, unter Verwendung einer für jede Zeitreihe berechneten numerischen Darstellung bestimmt werden. Zum Beispiel kann eine durchschnittliche Entfernung (z. B. Euklidisch, Manhattan oder gewichtet) in Bezug auf erfasste Daten von jeder Komponente zu den anderen Komponenten unter Verwendung der bestimmten numerischen Datendarstellung berechnet oder bestimmt werden.

In beispielhaften Ausführungsformen können die erfassten bzw. gemessenen Daten dann verarbeitet werden, um das Vorhandensein einer Anomalie oder von Anomalien bzw. eines Anomalieereignisses oder von Anomalieereignissen, bspw. innerhalb des Musters oder der Zeitsequenz von Daten, zu bestimmen. Wenn eine oder mehrere Anomalien bzw. Anomalieereignisse festgestellt werden, kann eine Korrekturmaßnahme ergriffen werden, um die Ursache der Anomalie zu bestimmen und/oder ein zugrunde liegendes Prozesssteuersystem zu verhindern.

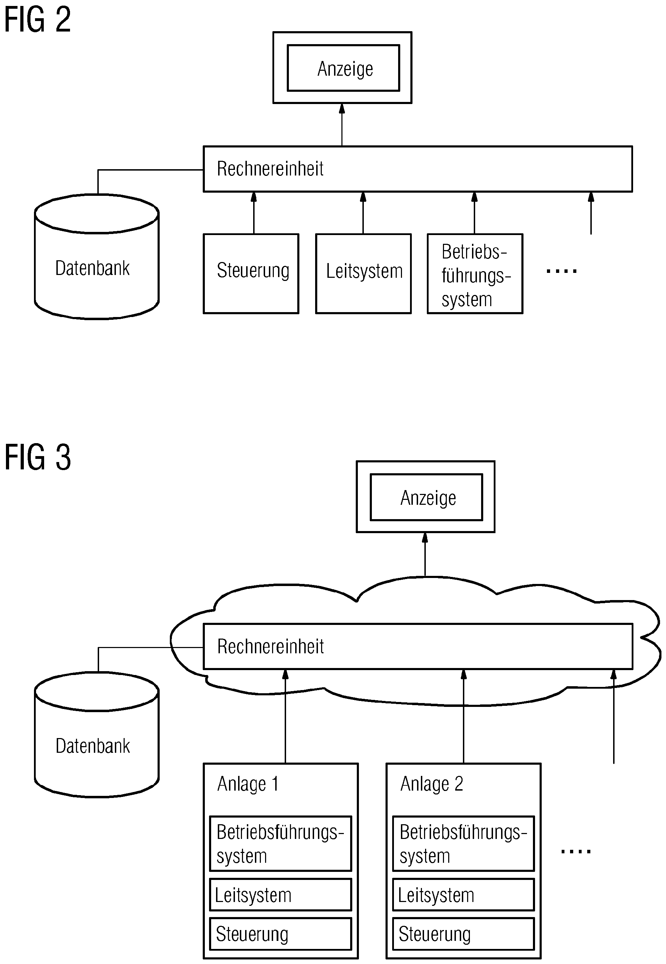

Eine weitere Ausführungsform zur Auswertung mindestens eines Datensatzes zumindest einer Komponente eines Automatisierungssystems ist in FIG 2 dargestellt. Eine oder mehrere Schritte des Verfahrens können dabei von einer Rechnereinheit, bspw. vor Ort in dem Automatisierungssystem, durchgeführt werden. Die Rechnereinheit kann kommunikativ mit einer oder mehreren Komponenten wie bspw. einer Steuerung, einem Leitsystem und/oder einem Betriebsführungssystem verbunden sein. Ferner können weitere Komponenten, nicht gezeigt mit der Recheneinheit verbunden sein. Eine oder mehrere dieser Komponenten können somit Daten an die Recheneinheit übertragen. Diese Daten können dann in einer Datenbank, die vorzugsweise ebenfalls mit der Rechnereinheit verbunden ist, abgelegt bzw. gespeichert werden.

Zur Erkennung einer Anomalie bzw. eines oder mehrerer Anomalieereignisse, zur Bestimmung eines Intervalls zwischen zwei Anomalieereignissen in einem ersten Datensatz und/oder zum Bestimmen von sich wiederholenden, und entsprechend dem Intervall beabstandeten Ereignissen in einem zweiten Datensatz können daher Daten aus der Datenbank und/oder (direkt) von den Komponenten verwendet werden. Ein oder mehrere Ereignisse entsprechen dabei Daten in dem ersten und/oder zweiten Datensatz.

Zudem kann bspw. zur Einleitung einer oder mehrerer Korrekturmaßnahmen eine Darstellung eines oder mehrerer der in dem zweiten Datensatz gefundenen Ereignisse oder ein Befund auf einer mit der Rechnereinheit kommunikativ verbundenen Anzeige erfolgen. Die Anzeige kann dabei Teil einer Anwendung sein, die bspw. in einem Browser eines Benutzergerätes abläuft.

Das vorgeschlagene Verfahren kann vor Ort in dem Automatisierungssystem auf einer dort befindlichen Rechnereinheit ausgeführt werden. Bspw. kann eine Bestimmung von sich wiederholenden, und entsprechend dem Intervall beabstandeten Ereignissen in einem zweiten Datensatz in einer Kommunikationsvorrichtung gem. FIG 1 erfolgen. Dabei können dann bspw. nur die gefunden Ereignisse und/oder daraus abgeleitete Befunde an die Cloud-Infrastruktur übertragen und/oder zur Anzeige gebracht werden.

Andererseits ist es auch, wie in FIG 3 dargestellt, möglich, dass die Auswertung vermittels einer Cloud-Infrastruktur und/oder vermittels einer in der Cloud-Infrastruktur ablaufenden Anwendung ausgeführt wird. Zu diesem Zweck können die von einer oder mehreren Komponenten erfassten Daten durch eine Anwendung, die in der Cloud-Infrastruktur abläuft, verarbeitet werden. Zudem umfasst die Ausführungsform, bei der die Anwendung in der Cloud-Infrastruktur abläuft, den Vorteil, dass mehrere Automatisierungssystem bzw. Teilsysteme eines Automatisierungssystems mit der Anwendung kommunikativ verbunden sein können und die Anwendung somit zentral abläuft bzw. Daten und/oder Datensätze aus mehreren Automatisierungssystemen bzw. Teilsystemen verarbeiten kann. Wie bspw. in FIG 3 dargestellt, kann ein erstes (Teil-) Automatisierungssystem eine erste Steuerung, ein erstes Leitsystem und/oder ein erstes Betriebsführungssystem umfassen. Ein zweites (Teil-)Automatisierungssystem kann eine zweite Steuerung, ein zweites Leitsystem und/oder ein zweites Betriebsführungssystem umfassen. Beide Automatisierungssysteme können zum Zwecke der Datenübertragung einer oder mehrerer ihrer Komponenten mit der Rechnereinheit, die gem. der Ausführungsform in FIG 3 in einer Cloud-Infrastruktur angeordnet ist, verbunden sein. Die Rechnereinheit kann die von dem ersten und/oder zweiten Automatisierungssystem empfangenen Daten in einer Datenbank, die bspw. ebenfalls Teil der Cloud-Infrastruktur sein kann, ablegen bzw. speichern.

Ferner kann die in der Rechnereinheit oder auf einer sonstigen Vorrichtung ablaufende Anwendung zur Auswertung eines oder mehrerer Datensätze vermittels einer Anzeige- und/oder Bedieneinheit konfiguriert werden. Bspw. können Daten in Form der einen oder mehreren Datensätze identifiziert werden und oder eines oder mehrere Ereignisse in den Datensätzen als Anomalieereignisse identifiziert werden.

Ein oder mehrere Ergebnisse der Auswertung können dann auf der Anzeige dargestellt werden, bspw. damit sie von einem Benutzer zur Kenntnis genommen werden.

Für eine effizientere Interpretation von Anomalien wird somit ein Verfahren zur Erkennung wiederkehrender Zusammenhänge vorgeschlagen, das auf einer Recheneinheit lokal in Anlagen oder in einer Cloud-Infrastruktur läuft, die Daten aus Steuerung, Leit- und Betriebsführungssystemen auswertet und ggf. das Ergebnis an einer Anzeigeeinheit einem Benutzer, wie bspw. einem Datenanalysten, zur Verfügung stellt.

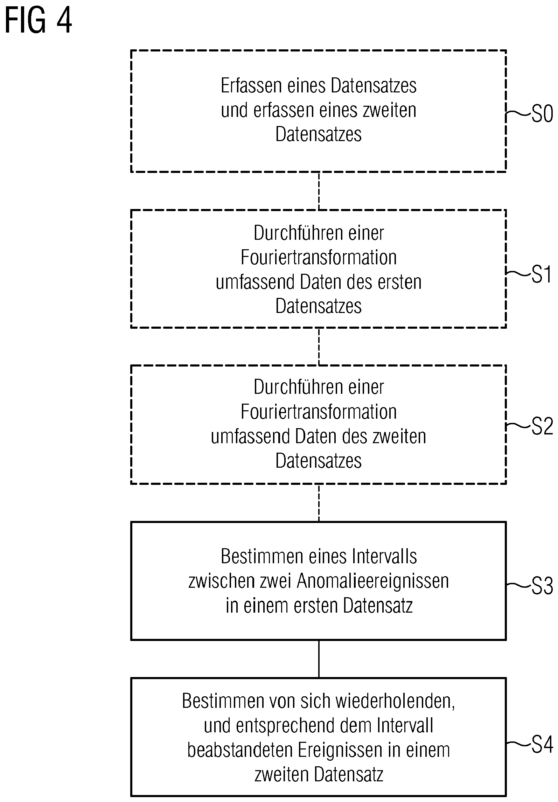

In FIG 4 ist eine Ausführungsform eines vorgeschlagenen Verfahrens dargestellt. Zunächst wird ein einem Schritt S0 erster und/oder ein zweiter Datensatz erfasst oder, bspw. von einem Benutzer, ausgewählt. Dies kann, wie bereits erwähnt, automatisch durch die, bspw. kontinuierliche, Bestimmung einer oder mehrerer Anomalien in einem Daten(satz) über die Zeit geschehen, bspw. durch Nutzung des Datensatzes direkt oder durch manuelle Eingabe eines Benutzer. Unter einem Datensatz wird die Zusammenfassung von mehreren Daten verstanden. Das Erfassen eines ersten Datensatzes und eines zweiten Datensatzes kann bspw. durch Laden des Datensatzes in eine Anwendung, d.h. ein Computerprogramm, erfolgen. Dabei kann der erste Datensatz getrennt vom zweiten Datensatz erfasst und/oder geladen werden. Bspw. kann zunächst der erste Datensatz und dann der zweite Datensatz erfasst und/oder geladen werden.

Anschließend kann in einem Schritt S1 das Durchführen einer Fouriertransformation umfassend Daten des ersten Datensatzes vorgesehen sein. Vorzugsweise werden dabei insbesondere die den Anomalieereignissen entsprechenden Daten einer Fouriertransformation unterzogen. Anschließende kann in einem Schritt S2 das Durchführen einer Fouriertransformation der Daten des zweiten Datensatzes erfolgen.

Der erste bzw. der zweite Datensatz können bspw. einzelne Variablen einer oder mehrerer Komponenten eines Automatisierungssystems repräsentieren. Diese Datensätze können einer Fouriertransformation, wie bspw. einer Fast-Fourier-Transformation, unterzogen werden.

In einem Schritt S3 kann das Bestimmen eines Intervalls zwischen zwei Anomalieereignissen in einem ersten Datensatz erfolgen. Bei den Anomalieereignissen kann es sich um ein oder mehrere Anomalieereignisse der gleichen Anomalie oder um Anomalieereignisse unterschiedlicher Anomalien handeln. Eine Anomalie wird bspw. in der Fouriertransformierten durch einen Peak, d.h. vermehrtes Auftreten eines Ereignisses eines bestimmten Typs oder mehrerer Typen, wiedergegeben. Diese Ereignisse werden als Anomalieereignisse bezeichnet. In der Fouriertransformierten können mehrere dieser Peaks vorkommen. Ein oder mehrere Peaks können unterschiedlichen Anomalien entsprechen.

Die Anomalieereignisse einer Anomalie sind daher voneinander im Ursprungsraum voneinander beabstandet, d.h. es liegt ein bspw. zyklisches, Intervall zwischen zwei, bspw. sich wiederholenden, Anomalieereignissen. Im Bildraum bilden die Anomalieereignisse einen oder mehrere Peaks. Anomalieereignisse einer Anomalie sind somit (im Ursprungsraum) alle gleich voneinander beabstandet. Für den Fall, dass Anomalieereignisse unterschiedlicher Anomalien betrachtet werden, so sind auch die Anomalieereignisse einer ersten Anomalie von den Anomalieereignissen einer zweiten Anomalie beabstandet, d.h. es liegt auch hier ein (unter Umständen zu dem ersten Intervall verschiedenes, zweites) Intervall zwischen zwei Anomalieereignissen vor. Wird dieses Intervall bestimmt, so kann es zum Auffinden von Zusammenhängen, d.h. Abhängigkeiten und Ursächlichkeiten von einem oder mehreren Anomalieereignissen, verwendet werden.

In einem Schritt S4 kann das Bestimmen von sich wiederholenden, und entsprechend dem Intervall beabstandeten Ereignissen in einem zweiten Datensatz erfolgen. Vorzugsweise werden dabei anhand der Fouriertransformierten des zweiten Datensatzes ein oder mehrere Ereignisse in dem zweiten Datensatz bestimmt. Diese Ereignisse können bestimmt werden, indem Ereignisse bestimmt werden, die entsprechend dem (vermittels eines oder mehrerer Anomalieereignisse in dem ersten Datensatz bestimmten) Intervall beabstandet sind. Somit können die Anomalieereignisse einer bestimmten Periodizität in dem ersten Datensatz Ereignissen mit der gleichen Periodizität in dem zweiten Datensatz zugeordnet werden. Bei den Ereignissen in dem zweiten Datensatz kann es sich um wiederholende, entsprechend dem Intervall, welches bspw. vermittels des ersten Datensatzes bestimmt wurde, beabstandete Daten handeln. Daten in dem in einem Datensatz, bspw. dem zweiten Datensatz, können also Ereignissen entsprechen bzw. können anhand von Daten Ereignisse bestimmt werden. Bspw. kann ein Zusammenhang vermittels einer Korrelation der erfolgten Fouriertransformationen erkannt werden. Somit kann die Ursachenforschung bei Anomaliedetektion erfolgen und eine automatische Ursachencharakterisierung erfolgen.

Die in dem ersten Datensatz bestimmten Anomalieereignisse und/oder die in dem zweiten Datensatz bestimmen Ereignisse (die entsprechend dem Intervall voneinander beabstandet sind) können in einem Schritt S4 erkannt und anschließend einem Benutzer bereit gestellt werden. Dafür können diese Ereignisse abgespeichert und/oder angezeigt werden.

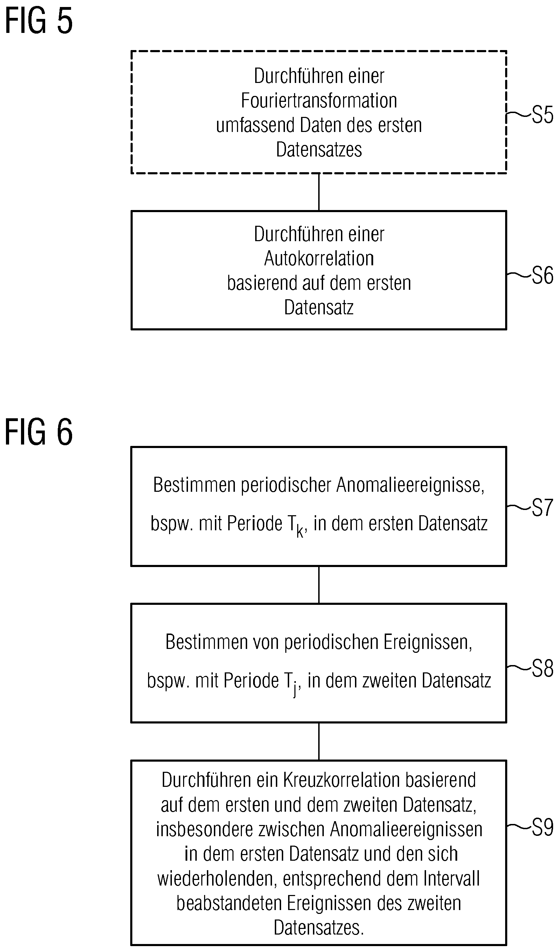

In FIG 5 sind weitere Schritte dargestellt, die gem. einer Ausführungsform mit denen der Ausführungsform gem. FIG 4 kombiniert werden können oder unabhängig davon ausgeführt werden können.

In einem Schritt S5 kann das Durchführen einer Fouriertransformation der Daten des ersten Datensatzes, wie in Zusammenhang mit FIG 4 beschrieben, erfolgen. In einem Schritt S6 kann das Durchführen einer Autokorrelation basierend auf dem ersten Datensatz erfolgen. Vorzugsweise wird dabei die Fouriertransformierte des ersten Datensatzes verwendet. Vorzugsweise enthält der erste Datensatz zu diesem Zweck Daten, die von einer oder mehreren Komponenten des Automatisierungssystems stammen und die über unterschiedliche Zeiträume erfasst wurden. Dadurch können, wie in Zusammenhang mit den vorherigen Figuren beschrieben, Abhängigkeiten und/oder Ursächlichkeiten von Ereignissen, insbesondere in Form von periodisch sich wiederholenden Ereignissen, in dem ersten Datensatz bestimmt werden.

In FIG 6 sind weitere Schritte einer vorgeschlagenen Ausführungsform dargestellt. In einem Schritt S7 kann das Bestimmen periodischer Anomalieereignisse, bspw. mit Periode Tk, in dem ersten Datensatz erfolgen. Bei der Periode kann es sich um das beschriebene Intervall handeln, das (zeitlich) beabstandete Anomalieereignisse in dem ersten Datensatz repräsentiert. In einem Schritt S8 kann das Bestimmen von periodischen Ereignissen, bspw. mit Periode Tj, in dem zweiten Datensatz erfolgen. In dieser Ausführungsform werden somit Ereignisse in dem ersten und dem zweiten Datensatz bestimmt, die unter Umständen nicht die gleiche Periodizität sondern eine unterschiedliche Periodizität aufweisen. In einem Schritt S9 kann das Durchführen einer Kreuzkorrelation basierend auf dem ersten und dem zweiten Datensatz erfolgen. Vorzugsweise kann diese ebenfalls auf einer Fouriertransformierten des ersten Datensatzes und einer Fouriertransformierten des zweiten Datensatzes angewendet werden. Das Durchführen der Kreuzkorrelation kann dabei basierend auf zwischen Anomalieereignissen in dem ersten Datensatz, bspw. mit Periodizität Tk, und den sich wiederholenden, entsprechend dem Intervall bzw. der Periodizität Tj beabstandeten Ereignissen des zweiten Datensatzes erfolgen. Somit kann bei Vorhandensein einer Anomalie bzw. eines oder mehrerer zyklisch auftretender Anomalieereignisse eine Ursachenbestimmung erfolgen. Bspw. können Abhängigkeiten von einzelnen und mehrdimensionalen Variablen zur Anomalie und/oder zueinander erkannt werden.

Während typischerweise die Erkennung von Wiederholungen in Daten bereits auf allen zeitabhängigen Daten fi(t) (KPI, Prozessdaten, Text, Prozessführung, Event, MES, Logistik, Wetter,...) angewandt wird, kann gemäß der vorliegenden Offenbarung auch erst als ein zweiter Schritt nach der Identifikation von relevanten Daten mit Anomalien, d.h. Datensätzen enthaltend Anomalieereignisse, eine einseitige Fouriertransformation zur Erkennung von Kandidaten für periodisch wiederkehrende Anomalien angewandt werden. Bei direkter Anwendung auf zeitabhängige Signale kann die Fouriertransformation gemäß der Offenbarung zur Identifikation von periodischen Anomalien genutzt werden. Während im Zeitbereich f(t) periodisch wiederkehrende Anomalien (bspw. sogenannte Montagautos) aufgrund des Grundrauschens unentdeckt bleiben könnten, sind sie im Spektralbereich F(s) klar durch eine angestiegene Amplitude (z.B. bei wöchentlicher Frequenz) zu erkennen. Bei einer überlagerten Darstellung je zweier Spektren j und k lässt sich eine gemeinsame Periodizität anhand erhöhter Amplituden bei gleichen Frequenzen s erkennen. Eine anschließende Korrelation der Signale lässt anhand erhöhter Amplituden der Korrelationsfunktion erkennen, welche Signale in gleichen Perioden wieder auftreten. Diese Zusatzinformation einer periodischen Wiederholung des Signals mit Frequenz s kann helfen, den Kandidaten als Anomalie zu identifizieren. Autokorrelationen (k=j) können genutzt werden, um die Periodizität (Korrelationslänge) Tk in der einen Dimension zu erkennen. Bei anschließender Kreuzkorrelation (k#j) werden die Daten auf Korrelationslänge Tk beschränkt, um den Rechenaufwand zu reduzieren und schnell auf Treffer zu kommen.

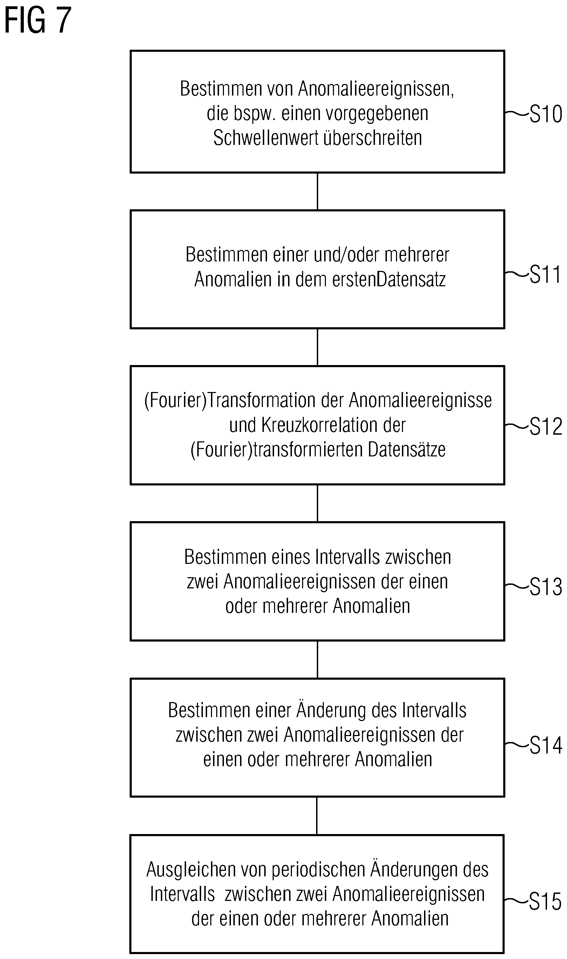

In FIG 7 ist eine Ausführungsform umfassend weitere Schritte dargestellt. In einem Schritt S10 kann das Bestimmen von Anomalieereignissen, die bspw. einen vorgegebenen Schwellenwert überschreiten, erfolgen. Dafür können bspw. Daten eines ersten Datensatz, eines zweiten Datensatzes und/oder weiterer Datensätze verwendet werden. In einem Schritt S11 kann das Bestimmen einer und/oder mehrerer Anomalien in dem ersten Datensatz erfolgen. Dazu können bspw. von einem Benutzer bestimmte Anomalien ausgewählt werden. Zusätzlich oder alternativ können bspw. Anomalien bestimmt werden, die eine bestimmte Mindestanzahl von Anomalieereignissen aufweisen. Der Schwellenwert kann dabei bspw. durch einen Benutzer vorgegeben werden. Ferner kann auch das Anomalieereignis durch einen Benutzer vorgegeben, d.h. definiert, werden. Bei dem Anomalieereignis kann es sich ferner um ein Muster, wie bspw. eine Datenfolge mit ansteigenden Werten in dem Datensatz, handeln. In einem Schritt S12 kann eine (Fourier)Transformation der Anomalieereignisse und/oder Kreuzkorrelation der (Fourier-)transformierten Datensätze erfolgen. Bereits hier können Abhängigen oder Ursächlichkeiten zwischen aufgetretenen Anomalien festgestellt werden. In einem Schritt S13 kann das Bestimmen eines Intervalls zwischen zwei Anomalieereignissen der einen oder mehreren Anomalien erfolgen. In einem Schritt S14 kann das Bestimmen einer Änderung des Intervalls zwischen zwei Anomalieereignissen der einen oder mehreren Anomalien erfolgen. In einem Schritt S15 kann das Ausgleichen von periodischen Änderungen des Intervalls zwischen zwei Anomalieereignissen der einen oder mehreren Anomalien erfolgen. Dadurch können bspw. einmal erkannte Abhängigkeiten oder Ursächlichkeiten verfolgt werden und insbesondere durch den Betrieb des Automatisierungssystems hervorgerufene Änderungen eines Intervalls zw. Anomalien, bspw. durch Unterbrechung(en), wie bspw. eine oder mehrere Pausen, berücksichtigt werden. Insbesondere wiederkehrende Zusammenhänge in einem Automatisierungssystem, wie bspw. bei sich wiederholenden Prozesseinflüssen, bei unregelmäßigen Pausenzeiten bzw. Übergabevorgängen zwischen Arbeitsstationen, können so erkannt werden.

Die Periodizität kann nicht nur über die Zeit, sondern auch gegenüber beliebigen anderen Größen fj ermittelt werden, indem die Fouriertransformation sukzessive über die vorhandenen Daten berechnet wird. Bei Anwendung der Fouriertransformation ist dabei eine nicht gleichmäßig abgetastete Frequenzanalyse zu berücksichtigen, da die Größen fi im Allgemeinen nicht mit gleichmäßigem Abstand vorhanden sind. Diese Analyse erkennt sich wiederholende Änderungen des Anomalieindikators gegenüber anderen Größen, so dass sich zum Beispiel zyklische Abweichungen bei unterschiedlichen Betriebsbedingungen (z.B. bei Vielfachen der Leistung oder Drehzahl) erkennen lassen. Eine Kompensation der unterschiedlichen Betriebsbedingungen kann durch eine Vorverarbeitung erfolgen, indem bspw. die Größen flj(t) = Bl(t)fj(t) nur bei der gewünschten lten Betriebsbedingung Bl(t)=1 für t=l und B(t)=0 für t≠l genutzt werden. Ferner können nicht vorhandene Werte für Spekatralanalysen, nicht für Korrelationsanalysen, bspw. mittels des sog. zero-padding ergänzt werden. Ferner kann eine Interpolation durch Upsampling mit Interpolationsfunktion (Polynom, Spline, etc.) oder Resampling als Downsampling der "schnelleren" Größe (Filter und Dezimation) erfolgen. Liegen an bestimmten Stellen von mehreren Sensoren keine Werte vor, können die Werte an diesen Stellen aus allen Signalen zu entfernen, um eine Scheinkorrelation durch setzen der Werte auf 0 zu verhindern. Ist die funktionale Abhängigkeit des Anomalieindikators von den Betriebsbedingungen bekannt, wird diese funktionale Abhängigkeit in ein Wavelet kodiert und anstelle der Fouriertransformation eine Wavelettransformation durchgeführt.

Werden eine oder mehrere Anomalien erkannt, kann deren Periodizität über die Anwendung einer Fourier-Transformation auf den Anomalieindikator a(t) einfach ermittelt werden. Zyklische Änderungen des Anomalieindikators können einen Hinweis auf ein regelmäßiges Wiederanlernen und damit einen noch nicht ausgereiften Anomalieindikator darstellen. Insbesondere bei sich zyklisch ändernden Betriebsbedingungen (z.B. Schichtbetrieb, jährliche Produktionsschwankungen, wiederkehrende Prozessschritte, Mitarbeiter, Lose, Produktionsschritte), die noch nicht im Anomalieindikator berücksichtigt sind, kommt es zu sich periodisch, ändernden Indikatoren. Die durch die Fouriertransformation entdeckte Periodizität der Frequenz ω kann aus dem Anomalieindikator mit a'(t)=a(t)/(aω·sin(ωt)) kompensiert werden.

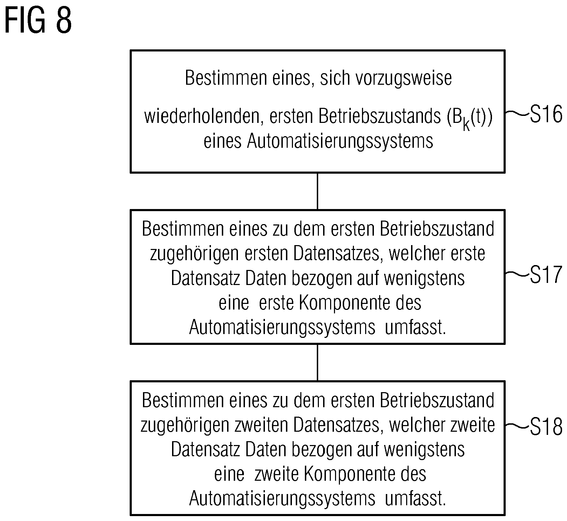

FIG 8 zeigt eine weitere Ausführungsform, die mit einem oder mehreren Schritten in den Figuren 4 bis 7 beschriebenen Ausführungsformen kombiniert werden kann. Andererseits können die Schritte S16 bis S18 unabhängig von den in Figuren 4 bis 7 beschriebenen Ausführungsformen ausgeführt werden. In einem Schritt S16 kann demgemäß das Bestimmen eines, sich vorzugsweise wiederholenden, ersten Betriebszustands (Bk(t)) eines Automatisierungssystems erfolgen. In einem Schritt S17 kann das Bestimmen eines zu dem ersten Betriebszustand zugehörigen ersten Datensatzes, welcher erste Datensatz Daten bezogen auf wenigstens eine erste Komponente des Automatisierungssystems umfasst, erfolgen. In einem Schritt S18 kann das Bestimmen eines zu dem ersten Betriebszustand zugehörigen zweiten Datensatzes, welcher zweite Datensatz Daten bezogen auf wenigstens eine zweite Komponente des Automatisierungssystems umfasst, erfolgen.

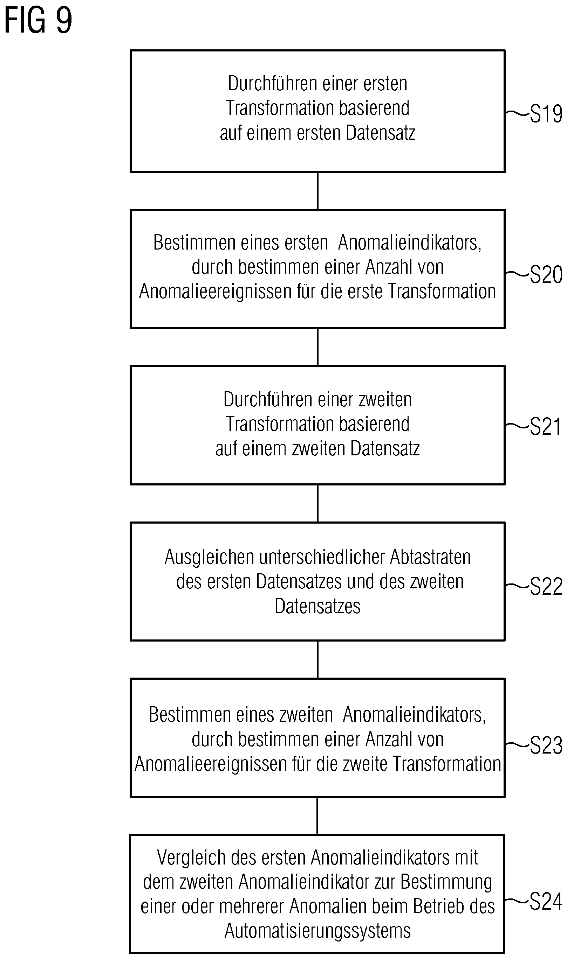

In FIG 9 ist eine weitere Ausführungsform umfassend Schritte S19 bis S24 dargestellt. In einem Schritt S19 kann das Durchführen einer ersten Transformation basierend auf einem ersten Datensatz erfolgen. In einem Schritt S20 kann das Bestimmen eines ersten Anomalieindikators, durch Bestimmen einer Anzahl von Anomalieereignissen für die erste Transformation erfolgen. Der erste Anomalieindikator kann bspw. oben beschriebenem Anomalie-Score entsprechen. In einem Schritt S21 kann das Durchführen einer zweiten Transformation basierend auf einem zweiten Datensatz erfolgen. In einem Schritt S22 kann das Ausgleichen unterschiedlicher Abtastraten des ersten Datensatzes und des zweiten Datensatzes erfolgen. Der Schritt S22 des Ausgleichens unterschiedlicher Abtastraten kann dabei in einem der Schritte S21 und/oder S19 enthalten sein.

In einem Schritt S23 kann das Bestimmen eines zweiten Anomalieindikators, bspw. durch Bestimmen einer Anzahl von Anomalieereignissen für die zweite Transformation erfolgen. Der zweite Anomalieindikator kann dabei bspw. oben beschriebenem Anomalie-Score entsprechen. Vorzugsweise wird für den zweiten Anomalieindikator der gleiche Typ von Anomalieindikator verwendet wie für den ersten Anomalieindikator. In einem Schritt S24 kann das Vergleichen des ersten Anomalieindikators mit dem zweiten Anomalieindikator zur Bestimmung einer oder mehrerer Anomalien beim Betrieb des Automatisierungssystems erfolgen.

Bei Wahl der geeigneten Transformation (Hilbert-, Wigner-Wille,o.ä.) werden beliebige sich wiederholende, funktionale Zusammenhänge erkannt. Gegenüber einer Korrelation werden nun auch eine Skalierung und Spreizung der der Transformation zugrundeliegenden Funktion für die Ermittlung eines Zusammenhanges zwischen Kennwerten berücksichtigt.

Ein Datensatz j mit den meisten Anomalien nach Transformation gegenüber anderen Datensätzen k, insbesondere nach Kompensation einer oder mehrerer Betriebsbedingungen, werden als Kandidaten für eine Anomalie genauer untersucht. Über ein Kriterium, wie bspw. einen vorgegebenen Schwellwert, kann bestimmt wird bestimmt, ob diese Anomalieanzahl auffällig gegenüber einem zufälligen Vorkommen von Anomalien ist. Zur Verringerung der notwendigen Rechenleistung wird die Transformation bspw. auf jeweils zwei Datensätze beschränkt. Die Reihenfolge wird für Industrieapplikationen passend gewählt, indem eine Anomalieerkennung auf einem Teil der Prozessdaten sukzessive durch Ereignis, Ort-, Funktion- (elektrisch, mechanisch, prozesstechnisch, logisch, akustisch, hydraulisch, pneumatisch, thermisch) bezogene Daten ergänzt wird, um so sukzessive unterschiedliche Zeitskalen und damit Periodizitäten der betrachteten Systeme zu berücksichtigen.

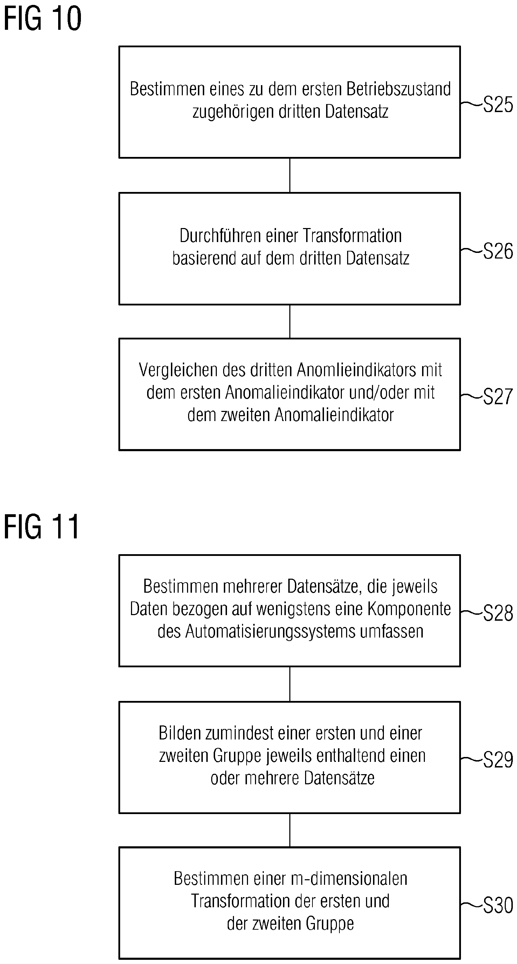

In FIG 10 ist eine weitere Ausführungsform umfassend Schritte S25 bis S27 dargestellt. In einem Schritt S25 kann das Bestimmen eines zu dem ersten Betriebszustand zugehörigen dritten Datensatzes erfolgen. In einem Schritt S26 kann das Durchführen einer ersten Transformation basierend auf einem ersten Datensatz erfolgen. In einem schritt S27 kann das Vergleichen des dritten Anomalieindikators mit dem ersten Anomalieindikator und/oder mit dem zweiten Anomalieindikator erfolgen. Somit kann festgestellt werden welche Variablen sich gleichartig verändert haben. Zudem kann eine Anomalie bzw. eines oder mehrere Anomalieereignisse mit mehreren oder allen Variablen korreliert werden. Dies kann bspw. vermittels der Berechnung der Korrelationsfunktion der aktuellen Fouriertransformierten mit derjenigen, die als Fingerprint dient, erfolgen. Wie bereits erwähnt, kann dafür eine Fast-Fourier-Transformation genutzt werden.

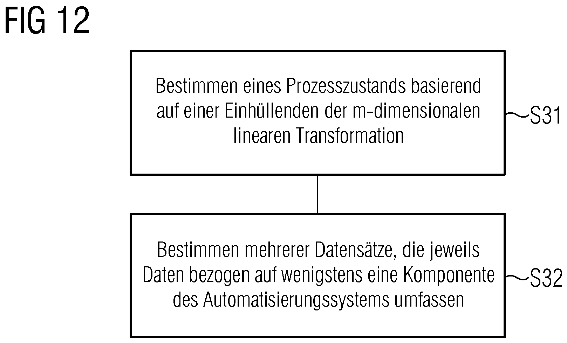

In FIG 11 ist eine weitere Ausführungsform umfassend Schritte S28 bis S30 dargestellt. In einem Schritt S28 kann das Bestimmen mehrerer Datensätze, die jeweils Daten bezogen auf wenigstens eine Komponente des Automatisierungssystems umfassen, erfolgen. In einem Schritt S29 kann das Bilden zumindest einer ersten und einer zweiten Gruppe jeweils enthaltend einen oder mehrere Datensätze erfolgen. In einem Schritt S30 kann das Bestimmen einer m-dimensionalen linearen Transformation der ersten und der zweiten Gruppe erfolgen. In FIG 12 ist eine weitere Ausführungsform umfassend Schritte S31 bis S33 dargestellt. In einem Schritt S31 kann das Bestimmen eines Prozesszustands basierend auf einer Einhüllenden einer m-dimensionalen Transformation, bspw. der Transformation, die aus Schritt S30 erhalten wird, erfolgen. In einem Schritt S32 kann das Bestimmen mehrerer Datensätze, die jeweils Daten bezogen auf wenigstens eine Komponente des Automatisierungssystems umfassen, erfolgen.

Auch nach Verwendung eines Mustererkennungsverfahrens (wie z.B. Kalmanfilter, Korrelationsanalysen, SVM, neuronale Netze, DecisionTreeAnalysis, K-NN, Self-organizing maps, hierarchical mixture models, Assoziationsnetze, ...) wird erfindungsgemäß eine Erkennung von Perioden wie folgt angewendet. Allen genannten Verfahren ist gleich, dass ein Zuordnungsfunktion zm(f1,...fn) zum mten Cluster als Funktion der fn Daten ermittelt wird. Durch die Anwendung einer multidimensionalen Fouriertransformation auf diese Zuordnungsfunktion wird die innere, periodische Struktur des Clusters aufgedeckt. Eine ungleichmäßige Abtastung kann durch die Nutzung einer nicht gleichmäßig abgetasteten Frequenzanalyse berücksichtigt werden. Der Kehrwert der Frequenzen, bei denen hohen Amplituden der Fouriertransformation auftreten, weist auf den Abstand zwischen zwei potentiellen Subclustern hin. Die betroffenen Spektraldimensionen weisen auf die Datendimensionen hin, die sich für eine weitere Trennung der Cluster eignen würden. Eine genauere Charakterisierung der Transformierten erfolgt anhand der Form der auftretenden Amplituden. Spitze Amplituden weisen auf eine ausgeprägte Periodizität hin, während flach Amplituden auf eine Schwankung in der Periodizität hinweist, die z.B. durch Schwankungen in Schicht- und Produktionszeiten erklärt werden kann. Periodische Spitzen z.B. Seitenbänder weisen auf korrelierte Periodizitäten hin, dass z.B. jeden Montag und jeden ersten Montag im Monat Anomalien auftreten. Diese Informationen helfen bei der Ursachenerkennung, wenn z.B. typische Vielfache in mehreren Transformationen auftauchen, was durch eine Korrelation der Transformierten erkannt werden kann. Autokorrelationen (k=j) erlauben es die Periodizität (Korrelationslänge) Tj der einen Dimension j zu erkennen. Hier könnten Pausen, Wartezeiten usw. durch die oben erklärte Vorverarbeitung schon berücksichtigt werden und umgekehrt erkannte Periodizitäten für die Identifikation von Betriebsbedingungen und damit die iterative Wahl von Bl für die Vorverarbeitung genutzt werden. Eine Kreuzkorrelation mit anderen Größen (k#j), die nach Resampling (Up-/Downsampling) und Padding aufbereitet wurden mit genau dieser Korrelationslänge Tj auch bei der Korrelation anderer Dimensionen ist besonders vielversprechend, so dass Rechenzeit eingespart werden kann. Eine Auswertung der Phasenverschiebung gibt an, wann eine periodische Anomalie gegenüber dem Beginn der Aufzeichnungen begonnen hat. Periodische Anomalien, die früh angefangen haben, weisen auf ein periodisches Anlernen hin während später beginnende Anomalien interessanter sind, da sie aktuellere Änderungen betreffen. Da zu erwarten ist, dass eine Anomalie mit einer Änderung der Korrelation einhergeht, also die Korrelation sich über der Zeit ändert, ist eine Trenddarstellung sich besonders stark über der Zeit ändernder Korrelationen vorteilhaft. Insbesondere Korrelationen mit starkem Anstieg über der Zeit sollten dahingehend überprüft werden, ob sie mit der Anomalie in Zusammenhang stehen.

Mehrere oder alle der genannten Schritte können dabei in ihrer Reihenfolge vertauscht werden und/oder automatisch nacheinander durchgeführt werden. Ferner ist es möglich, dass mehrere der Schritte zu einem Schritt zusammengefasst werden.

Von Vorteil ist den vorgenannten Schritten die systematische Vorgehensweise für die Charakterisierung von Anomalien und das Finden von für Anomalien ggf. ursächlichen Betriebs- bzw. Randbedingungen. Ferner können auch bei einem komplexen Automatisierungssystem mit zeitlich gedehnten und gestreckten sowie unterbrochenen Betriebsabläufen Zusammenhänge erkannt werden. Ferner können spezifische (Prozess-)Zykluszeiten und Betriebsbedingungen des jeweiligen Automatisierungssystems berücksichtigt werden.

Ferner wird ein computerlesbares Speichermedium vorgeschlagen. Das computerlesbare Speichermedium kann eine greifbare Vorrichtung sein, die Anweisungen zur Verwendung durch eine Befehlsausführungsvorrichtung speichern kann. Das computerlesbare Speichermedium kann zum Beispiel eine elektronische Speichervorrichtung, eine magnetische Speichervorrichtung, eine optische Speichervorrichtung, eine elektromagnetische Speichervorrichtung, eine Halbleiterspeichervorrichtung oder irgendeine geeignete Kombination der Vorstehenden sein, ist jedoch nicht darauf beschränkt. Eine nicht erschöpfende Liste spezifischerer Beispiele für das computerlesbare Speichermedium umfasst Folgendes: eine tragbare Computerdiskette, eine Festplatte, einen Direktzugriffsspeicher (RAM), einen Nur-Lese-Speicher (ROM), eine löschbare programmierbare Leseeinheit nur Speicher (EPROM oder Flash-Speicher), ein statischer Direktzugriffsspeicher (SRAM), ein tragbarer CD-ROM-Speicher (CD-ROM), eine DVD (Digital Versatile Disk), ein Speicherstick, eine Diskette, eine mechanisch abgelesene Lochkarte oder erhabene Strukturen in einer Rille, auf der Anweisungen aufgezeichnet sind, und jede geeignete Kombination der Vorstehenden. Ein computerlesbares Speichermedium soll nicht als transitorische Signale an sich verstanden werden, wie beispielsweise Funkwellen oder andere sich frei ausbreitende elektromagnetische Wellen, elektromagnetische Wellen, die sich durch einen Wellenleiter oder andere Übertragungsmedien (z. B. ein Glasfaserkabel durchlaufende Lichtpulse) oder elektrische Signale, die durch einen Draht übertragen werden. Computer-lesbare Programmanweisungen, die hierin beschrieben sind, können von einem computerlesbaren Speichermedium oder einem externen Computer oder einer externen Speichervorrichtung über ein Netzwerk, zum Beispiel das Internet, ein lokales Netzwerk, ein Weitverkehrsnetz und/oder ein drahtloses Netzwerk kommen. Das Netzwerk kann Kupferübertragungskabel, optische Übertragungsfasern, drahtlose Übertragung, Router, Firewalls, Switches, Gateway-Computer und/oder Edge-Server umfassen. Eine Netzwerkadapterkarte oder Netzwerkschnittstelle in jeder Computer-/Verarbeitungsvorrichtung empfängt computerlesbare Programmanweisungen von dem Netzwerk und leitet die computerlesbaren Programmanweisungen zur Speicherung in einem computerlesbaren Speichermedium innerhalb der jeweiligen Computer- Verarbeitungsvorrichtung weiter.

Aspekte der vorliegenden Erfindung werden hierin unter Bezugnahme auf Flussdiagrammdarstellungen und/oder Blockdiagramme von Verfahren, Vorrichtungen (Systemen) und Computerprogrammprodukten gemäß Ausführungsformen der Erfindung beschrieben. Es versteht sich, dass jeder Block der Flussdiagrammdarstellungen und/oder Blockdiagramme und Kombinationen von Blöcken in den Flussdiagrammdarstellungen und/oder Blockdiagrammen durch computerlesbare Programmanweisungen implementiert werden kann. Diese computerlesbaren Programmanweisungen können einem Prozessor eines Allzweckcomputers, eines Spezialcomputers oder einer anderen programmierbaren Datenverarbeitungsvorrichtung bereitgestellt werden, um eine Maschine zu erzeugen, so dass die Anweisungen über den Prozessor des Computers oder eine andere programmierbare Datenverarbeitung ausgeführt werden. Andere Vorrichtungen schaffen Mittel zum Implementieren der Funktionen/Handlungen, die in dem Flussdiagramm und/oder Blockdiagrammblock oder Blöcken spezifiziert sind. Diese computerlesbaren Programmanweisungen können auch in einem computerlesbaren Speichermedium, wie bspw. das einen Computer, eine programmierbare Datenverarbeitungsvorrichtung und/oder andere Vorrichtungen, gespeichert sein. In dem computerlesbaren Speichermedium, in dem Anweisungen gespeichert sind bzw. kann dieses Anweisungen enthalten, die Aspekte der in dem Flussdiagramm mittels Blockdiagramm, Block oder Blöcken spezifizierten Funktion / Handlung, entsprechen. Das Flussdiagramm und die Blockdiagramme in den Figuren veranschaulichen die Architektur, Funktionalität und Operation möglicher Implementierungen von Systemen, Verfahren und Computerprogrammprodukten gemäß verschiedenen Ausführungsformen der vorliegenden Erfindung. In dieser Hinsicht kann jeder Block in dem Flussdiagramm oder den Blockdiagrammen ein Modul, ein Segment oder einen Teil von Anweisungen darstellen, der eine oder mehrere ausführbare Anweisungen zum Implementieren der spezifizierten logischen Funktion (en) umfasst. Bei einigen alternativen Implementierungen können die in dem Block angegebenen Funktionen außerhalb der in den Figuren angegebenen Reihenfolge auftreten. Zum Beispiel können zwei Blöcke, die nacheinander gezeigt sind, tatsächlich im Wesentlichen gleichzeitig ausgeführt werden, oder die Blöcke können manchmal in der umgekehrten Reihenfolge ausgeführt werden, abhängig von der involvierten Funktionalität. Es ist auch anzumerken, dass jeder Block der Blockdiagramme und / oder Flussdiagrammabbildungen und Kombinationen von Blöcken in den Blockdiagrammen und / oder in der Flussdiagrammdarstellung durch spezielle hardwarebasierte Systeme implementiert werden kann, die die spezifizierten Funktionen oder Vorgänge ausführen. Beispiele für hardwarebasierte Systeme sind optische Linsen oder Filterbänke als Hardwarerealisierungen für Fouriertransformationen, die auch als mikroelektrische mechanische Systeme realisiert sein können während Computeranweisungen Korrelationen und Grenzwertüberwachungen durchführen.

In Übereinstimmung mit noch einer anderen Ausführungsform wird ein Computerprogrammprodukt zum Detektieren einer Anomalie in Daten, die bspw. von jedem von mehreren Datenquellen bereitgestellt werden, beschrieben. Das Computerprogrammprodukt umfasst ein oder mehrere computerlesbare Speichermedien mit darauf ausgeführten computerausführbaren Anweisungen. Das computerlesbare Speichermedium enthält Anweisungen zum Empfangen einer entsprechenden Zeitreihendatensequenz von jedem der mehreren Datenquellen, wobei jede Datensequenz eine Vielzahl von Datenwerten darstellt, die von einem entsprechenden der mehreren Datenquellen mit einer Abtastfrequenz erfasst werden, jeder der Datenwerte jeder Datensequenz wird zu einem bestimmten Zeitpunkt in der Zeitreihendatenfolge abgetastet.

## Patentansprüche

1. Verfahren zur Auswertung mindestens eines Datensatzes zumindest einer Komponente eines Automatisierungssystems (4), **gekennzeichnet durch** Umfassen und/oder Veranlassen folgender Schritte:
Bestimmen (S3) eines Intervalls zwischen zwei Anomalieereignissen in einem ersten Datensatz, welcher erste Datensatz Daten bezogen auf wenigstens eine erste Komponente (2a, 2b, 2c, 2d, 2e) des Automatisierungssystems umfasst, und
Bestimmen (S4) von sich wiederholenden, und entsprechend dem Intervall beabstandeten Ereignissen in einem zweiten Datensatz, welcher zweite Datensatz Daten wenigstens einer zweiten Komponente (2a, 2b, 2c, 2d, 2e) des Automatisierungssystems (4) umfasst.

2. Verfahren nach dem vorherigen Anspruch, **gekennzeichnet durch** das Umfassen und/oder Veranlassen folgender Schritte: Durchführen (S1) einer Fouriertransformation umfassend bzw. basierend auf Daten des ersten Datensatzes, insbesondere den Anomalieereignissen entsprechenden Daten, und
Durchführen (S2) einer Fouriertransformation umfassend bzw. basierend auf Daten des zweiten Datensatzes, insbesondere den sich wiederholenden, entsprechend dem Intervall beabstandeten Ereignissen entsprechenden Daten.

3. Verfahren nach einem der vorherigen Ansprüche, **gekennzeichnet durch** das Umfassen und/oder Veranlassen folgenden Schrittes:
Durchführen (S6) einer Autokorrelation basierend auf dem ersten Datensatz, insbesondere umfassend Anomalieereignisse in dem ersten Datensatz und besonders bevorzugt basierend auf einer Fouriertransformierten des ersten Datensatzes.

4. Verfahren nach einem der vorherigen Ansprüche, **gekennzeichnet durch** das Umfassen und/oder Veranlassen folgender Schritte:
Bestimmen (S7) periodischer Anomalieereignisse, bspw. mit Periode Tₖ, in dem ersten Datensatz und/oder
Bestimmen (S8) von periodischen Ereignissen, bspw. mit Periode Tⱼ, in dem zweiten Datensatz.

5. Verfahren nach dem vorherigen Anspruch, **gekennzeichnet durch** das Umfassen und/oder Veranlassen folgenden Schrittes: Durchführen (S9) einer Kreuzkorrelation basierend auf dem ersten und dem zweiten Datensatz, insbesondere zwischen Anomalieereignissen in dem ersten Datensatz und den sich wiederholenden, entsprechend dem Intervall beabstandeten Ereignissen des zweiten Datensatzes.

6. Verfahren zur Auswertung von Daten eines Automatisierungssystem nach einem der vorherigen Ansprüche, **gekennzeichnet durch** Umfassen und/oder Veranlassen folgender Schritte: Bestimmen (S10) einer und/oder mehrerer Anomalien in dem ersten Datensatz, durch Bestimmen von Anomalieereignissen, die bspw. einen vorgegebenen Schwellenwert überschreiten,
Bestimmen (S13) eines Intervalls zwischen zwei Anomalieereignissen der einen oder mehreren Anomalien, insbesondere durch (Fourier-)Transformation der Anomalieereignisse und Kreuzkorrelation der (Fourier-)transformierten Datensätze, vorzugsweise zur Bestimmen (S14) einer Änderung des Intervalls zwischen zwei Anomalieereignissen der einen oder mehreren Anomalien.

7. Verfahren zur nach dem vorherigen Anspruch, **gekennzeichnet durch** das Umfassen und/oder Veranlassen folgenden Schrittes:
Ausgleichen (S15) von periodischen Änderungen des Intervalls zwischen zwei Anomalieereignissen der einen oder mehreren Anomalien, wobei bevorzugt im Fall von periodischen Änderungen des Intervalls zwischen zwei Anomalieereignissen die Periodizität zur Kompensation der Änderung des Intervalls zwischen zwei Anomalieereignissen verwendet wird.

8. Verfahren zur Auswertung von Daten eines Automatisierungssystem nach einem der vorherigen Ansprüche, **gekennzeichnet durch** Umfassen und/oder Veranlassen folgender Schritte: Bestimmen (S16) eines, sich vorzugsweise wiederholenden, ersten Betriebszustands Bₖ(t) des Automatisierungssystems (4), und
Bestimmen (S17) eines zu dem ersten Betriebszustand zugehörigen ersten Datensatzes, welcher erste Datensatz Daten bezogen auf wenigstens eine erste Komponente des Automatisierungssystems umfasst,
Bestimmen (S18) eines zu dem ersten Betriebszustand zugehörigen zweiten Datensatzes, welcher zweite Datensatz Daten bezogen auf wenigstens eine zweite Komponente des Automatisierungssystems umfasst.

9. Verfahren zur Auswertung von Daten nach einem der vorherigen Ansprüche, **gekennzeichnet durch** das Umfassen und/oder Veranlassen folgender Schritte:
Durchführen (S19) einer ersten Transformation basierend auf dem ersten Datensatz, und
Bestimmen (S20) eines ersten Anomalieindikators, durch Bestimmen einer Anzahl von Anomalieereignissen, die bspw. einen vorgegebenen Schwellenwert überschreiten, für die erste Transformation, und
Durchführen (S21) einer zweiten Transformation basierend auf dem ersten Datensatz,
Bestimmen (S23) eines zweiten Anomalieindikators, durch Bestimmen einer Anzahl von Anomalieereignissen, die bspw. einen vorgegebenen Schwellenwert überschreiten, für die zweite Transformation, und
bevorzugt Vergleichen (S24) des ersten Anomalieindikators mit dem zweiten Anomalieindikator zur Bestimmung einer oder mehrerer Anomalien beim Betrieb des Automatisierungssystems.

10. Verfahren zur Auswertung von Daten nach einem der vorherigen Ansprüche, **gekennzeichnet durch** das Umfassen und/oder Veranlassen folgenden Schrittes:
Ausgleichen (S22) unterschiedlicher Abtastraten des ersten Datensatzes und des zweiten Datensatzes, bspw. durch Ausgleichen der verwendeten Abtastrate der Fouriertransformation.

11. Verfahren zur Auswertung von Daten nach dem vorherigen Anspruch, **gekennzeichnet durch** das Umfassen und/oder Veranlassen folgender Schritte:
Bestimmen (S25) eines zu dem ersten Betriebszustand zugehörigen dritten Datensatzes, welcher dritte Datensatz Daten bezogen auf wenigstens eine dritte Komponente des Automatisierungssystems während des ersten Betriebszustands umfasst,
Durchführen (S26) einer Transformation basierend auf dem dritten Datensatz,
Bestimmen eines dritten Anomalieindikators, durch Bestimmen einer Anzahl von Anomalieereignissen, die bspw. einen vorgegebenen Schwellenwert überschreiten, für die dritte Transformation, und/oder
Vergleichen (S27) des dritten Anomalieindikators mit dem ersten Anomalieindikator und/oder mit dem zweiten Anomalieindikator.

12. Verfahren zur Auswertung von Daten eines Automatisierungssystem, **gekennzeichnet durch** Umfassen und/oder Veranlassen folgender Schritte:
Bestimmen (S28) mehrerer Datensätze, die jeweils Daten bezogen auf wenigstens eine Komponente des Automatisierungssystems umfassen,
Bilden (S29) zumindest einer ersten und einer zweiten Gruppe jeweils enthaltend einen oder mehrere Datensätze,
Bestimmen (S30) einer m-dimensionalen linearen Transformation der ersten und der zweiten Gruppe, wobei m der Anzahl der Datensätze der Gruppe entspricht.

13. Verfahren zur Auswertung von Daten nach dem vorherigen Anspruch, **gekennzeichnet durch** das Umfassen und/oder Veranlassen folgender Schritte:
Bestimmen (S31) eines Prozesszustands basierend auf einer Einhüllenden der m-dimensionalen linearen Transformation,
Bestimmen (S32) mehrerer Datensätze, die jeweils Daten bezogen auf wenigstens eine Komponente des Automatisierungssystems umfassen.

14. Verfahren zur Auswertung von Daten nach dem vorherigen Anspruch, **gekennzeichnet durch** das Umfassen und/oder Veranlassen folgender Schritte:
Bereitstellen und ggfs. Speichern eines oder mehrerer Ergebnisse der vorherigen Ansprüche 1 bis 13.

15. Vorrichtung zur Durchführung des Verfahrens nach einem der vorherigen Ansprüche, wobei die Vorrichtung zur Durchführung einer oder mehrerer Schritte der Ansprüche 1 bis 13 eingerichtet ist.

16. Computerprogramm mit Programmcodemittel, die, wenn sie ausgeführt werden, dazu dienen, einen oder mehrere der Verfahrensschritte der Ansprüche 1 bis 13 auszuführen.

17. Computerprogrammprodukt mit Programmcodemittel, die, wenn sie ausgeführt werden, dazu dienen, einen oder mehrere der Verfahrensschritte der Ansprüche 1 bis 13 auszuführen.

18. Datenstrom, der ein Computerprogramm nach Anspruch 16 repräsentiert.
